# EUROPEAN PATENT APPLICATION

(11) **EP 4 742 477 A1**
(43) Date of publication of application: **13.05.2026**
(21) Application number: 24212134.1
(22) Date of filing: 11.11.2024
(51) Int. Cl.: H02J 1/10, G06F 1/30, H02M 3/156

(54) **A POWER SUPPLY AND A METHOD FOR SUPPLYING DIRECT CURRENT TO A LOAD**

(71) Applicant: Skeleton Technologies GmbH, 04420 Markranstädt (DE)
(72) Inventor: Järveläinen, Tero, 11415 Tallinn (EE); Madiberk, Taavi, 11415 Tallinn (EE)
(74) Representative: Väänänen, Janne Kalervo

(57) **Abstract**

A power supply (100) for feeding direct current (I_{DC}) to a load (109) comprises an input voltage terminal (101) for receiving input voltage (V_{AC}), a direct voltage terminal (102) for supplying the direct current (I_{DC}) to the load, an input voltage converter (103) configured to convert the input voltage (V_{AC}) to direct voltage (V_{DC}) of the direct voltage terminal, and a capacitor (104) connected to the direct voltage terminal to respond to beginnings of peak current needs of the load. To respond to continuation sections of the peak current needs of the load, the power supply comprises a super-capacitor (105) and a direct voltage converter (106) between the super-capacitor and the direct voltage terminal and configured to carry out voltage conversion between direct voltage (V_{DC_S}) of the super-capacitor and the direct voltage (V_{DC}) of the direct voltage terminal.

## Description

### Field

The invention relates to a power supply for feeding direct current "DC" to a load such as a data processing system, e.g. a graphics processing unit "GPU". Furthermore, the invention relates to a method for supplying direct current to a load, e.g. a data processing system.

### Background

In many applications, a power demand of a direct current "DC" load can vary significantly over time so that peak power demands can be significantly higher than an average power demand. For example, in a data center, a power demand of a data processing system, e.g. a graphics processing unit "GPU", supplied by an alternating voltage - direct voltage "AC-DC" converter or a direct voltage "DC-DC" converter can vary strongly over time and thus it can be challenging to satisfy high peak power demands as well as to react fast enough to changes in the power demand. Inability to respond to the peak power demands as well as delays in responding to abrupt increases in the power demand reduce the performance of the data processing system. Furthermore, delays in responding to abrupt decreases in the power demand may lead to additional power losses and heat generation.

Publication US20050184706 describes a hybrid capacitor module for responding to peak power demands of an amplifier of an audio system. The hybrid capacitor module comprises an electronic foil capacitor having a relatively low equivalent series resistance "ESP" and a relatively short charge/discharge time. Furthermore, the hybrid capacitor module comprises a plurality of super-capacitors each having a relatively high capacitance and being connected to each other in series and then being connected to the electronic foil capacitor in parallel. Each super-capacitor can be for example a carbon capacitor cell or an electric double layer capacitor "EDLC". The electronic foil capacitor and the super-capacitors connected in parallel provide electric energy to the amplifier to produce a required output power during a peak power demand of the amplifier, e.g. when the audio system needs to deliver an instantaneous bass peak.

An inherent inconvenience related to a capacitor system connected to an output of a DC voltage source and thereby to an input of a DC load is that DC voltage needs to change in order that the capacitor system would release or receive energy because, if DC voltage U of a capacitor system having capacitance C were constant, the energy ½CU² stored in the capacitor system would be constant, too. This limits the suitability of a capacitor system of the kind mentioned above for applications in which DC voltage should be kept substantially constant.

### Summary

The following presents a simplified summary to provide basic understanding of some aspects of various embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying and non-limiting embodiments.

In accordance with the invention, there is provided a new power supply for feeding direct current "DC" to a load such as a data processing system, e.g. a graphics processing unit "GPU".

The power supply according to the invention comprises:
- an input voltage terminal for receiving input voltage,
- a direct "DC" voltage terminal for supplying DC current to the load of the power supply,
- an input voltage converter between the input voltage terminal and the DC voltage terminal, and configured to convert the input voltage to the DC voltage of the DC voltage terminal,
- a first capacitor connected between positive and negative poles of the DC voltage terminal, the first capacitor comprising at least one of: an electrolytic capacitor and a foil capacitor,
- a second capacitor being a super-capacitor, and
- a direct voltage "DC-DC" converter between the second capacitor and the DC voltage terminal and configured to carry out voltage conversion between DC voltage of the second capacitor and the DC voltage of the DC voltage terminal.

As the second capacitor is connected to the DC voltage terminal via the DC-DC converter, the second capacitor can be discharged to respond to peak power situations and charged during low load situations so that the DC voltage of the DC voltage terminal does not need to vary. Thus, the energy storage capacity of the second capacitor, i.e. the super-capacitor, can be effectively utilized. The first capacitor is used for responding to beginnings of peak current needs of the load to compensate for any delays in the operation of the DC-DC converter and/or in discharging the second capacitor.

The above-mentioned input voltage can be for example single-phase AC voltage, multi-phase, e.g. three-phase, AC voltage, or DC voltage. Thus, the above-mentioned input voltage converter can be an AC-DC converter for single-phase AC voltage, an AC-DC converter for multi-phase, e.g. three-phase, AC voltage, or a DC-DC converter.

The above-mentioned first capacitor may comprise one or more electrolytic capacitor components and/or one or more foil capacitor components. In an exemplifying case where the first capacitor comprises many capacitor components, the capacitor components can be connected in parallel with each other, in series with each other, or in some other way e.g. so that there is a series connection of groups of parallel connected capacitor components or a parallel connection of groups of series connected capacitor components. Correspondingly, the above-mentioned second capacitor may comprise one or more super-capacitor components. In an exemplifying case where the second capacitor comprises many super-capacitor components, the super-capacitor components can be connected in parallel with each other, in series with each other, or in some other way e.g. so that there is a series connection of groups of parallel connected super-capacitor components or a parallel connection of groups of series connected super-capacitor components.

In accordance with the invention, there is also provided a new method for supplying DC current to a load such as a data processing system, e.g. a graphics processing unit "GPU".

The method according to the invention comprises:
- receiving input voltage at an input voltage terminal,
- converting, with an input voltage converter, the input voltage to DC voltage of a DC voltage terminal supplying the DC current to the load,
- responding to beginnings of peak current needs of the load with a first capacitor connected between positive and negative poles of the DC voltage terminal, the first capacitor comprising at least one of: an electrolytic capacitor and a foil capacitor, and
- responding to continuation sections of the peak current needs of the load by supplying energy from a second capacitor being a super-capacitor to the DC voltage terminal with a DC-DC converter carrying out voltage conversion between DC voltage of the second capacitor and the DC voltage of the DC voltage terminal.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features.

The features recited in dependent claims are mutually freely combinable unless otherwise explicitly stated.

Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
Figure 1 illustrates a power supply according to an exemplifying and non-limiting embodiment,
Figure 2 illustrates a power supply according to another exemplifying and non-limiting embodiment, and
Figure 3 shows a flowchart of a method according to an exemplifying and non-limiting embodiment for supplying DC current to a load.

### Description of the exemplifying embodiments

The specific examples provided in the description given below should not be construed as limiting the scope and/or the applicability of the invention. Lists and groups of examples provided in the description given below are not exhaustive unless otherwise explicitly stated.

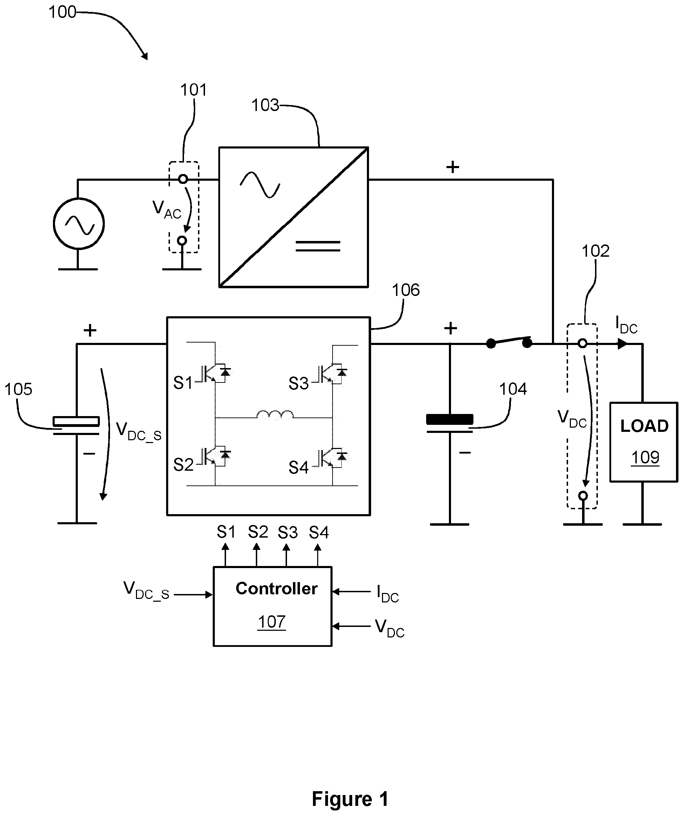

Figure 1 illustrates a power supply 100 according to an exemplifying and non-limiting embodiment. The power supply 100 comprises an input voltage terminal 101 for receiving input voltage. In this exemplifying case, the input voltage is single-phase AC voltage V_{AC}. The power supply 100 comprises a direct "DC" voltage terminal for supplying DC current I_{DC} to a load 109 such as for example a data processing system, e.g. a graphics processing unit "GPU". The power supply 100 comprises an input voltage converter 103 between the input voltage terminal 101 and the DC voltage terminal 102. In this exemplifying case, the input voltage converter 103 is an alternating voltage - direct voltage "AC-DC" converter that is configured to convert the AC voltage V_{AC} to DC voltage V_{DC} of the DC voltage terminal 102. In this exemplifying case, the AC voltage V_{AC} is single-phase AC voltage, but it is also possible to that the input voltage converter is e.g. an AC-DC converter configured to convert multi-phase, e.g. three-phase, AC voltage to direct voltage. The input voltage converter 103 can be for example a diode rectifier, a diode rectifier provided with a power factor correction "PFC" circuit, or an active AC-DC converter based on controllable switches e.g. insulated gate bipolar transistor "IGBT", metal oxide field effect transistors "MOSFET", or some other suitable power electronic switches.

The power supply 100 comprises a first capacitor 104 connected between positive and negative poles of the DC voltage terminal 102. The first capacitor comprises an electrolytic capacitor and/or a foil capacitor. In this exemplifying case, the first capacitor 104 comprises an electrolytic capacitor. The power supply 100 comprises a second capacitor 105 that is a super-capacitor and may comprise for example one or more carbon capacitor cells and/or one or more electric double layer capacitor "EDLC" cells. The power supply 100 comprises a direct voltage "DC-DC" converter 106 between the second capacitor 105 and the DC voltage terminal 102. The DC-DC converter 106 is configured to carry out voltage conversion between DC voltage V_{DC _S} of the second capacitor 105 and the DC voltage V_{DC} of the DC voltage terminal 102. As the second capacitor 105 is connected to the DC voltage terminal 102 via the DC-DC converter 106, the second capacitor 105 can be discharged to respond to peak power situations and charged during low load situations so that the DC voltage V_{DC} of the DC voltage terminal 102 does not need to vary. Thus, the energy storage capacity of the second capacitor 105, i.e. the super-capacitor, can be effectively utilized. The first capacitor 104 is used for responding to beginnings of peak current needs of the load 109 to compensate for any delays in the operation of the DC-DC converter 106 and/or in discharging the second capacitor 105.

The DC-DC converter 106 can be, for example, a bi-directional buck-boost converter as illustrated in figure 1. It is however also possible that the DC-DC converter 106 is a bi-directional converter of some other type. In some embodiments, the DC-DC converter 106 can provide a galvanic separation between the second capacitor 105 and the DC voltage terminal 102. In the exemplifying case having the galvanic separation, the second capacitor may comprise capacitive components connected to each other so that there is a middle point that is connected to the ground. Thus, the maximum voltage of the second capacitor can the two times the maximum voltage with respect to the ground.

The power supply 100 illustrated in figure 1 comprises a controller 107 that is configured to control the DC-DC converter 106 to charge the second capacitor 105 in response to a situation in which the DC current I_{DC} is below a first predetermined current limit, i.e. there is a low-load situation, and the DC voltage V_{DC_S} of the second capacitor 105 is below a predetermined upper limit V_{OC_Smax} i.e. the DC voltage V_{DC_S} has not yet reached its highest allowable value. The controller 107 is configured to control the DC-DC converter 106 to discharge the second capacitor 105 in response to a situation in which the direct current I_{DC} is above a second predetermined current limit, i.e. there is a high-load situation, and the DC voltage Voc_s of the second capacitor 105 is above a predetermined lower limit i.e. at least on a level needed for reliable operation of the DC-DC converter 106. Furthermore, the controller 107 can be configured to control the DC-DC converter 106 to discharge the second capacitor 105 in response to a situation in which the DC voltage V_{DC} of the DC voltage terminal 102 is below a first limit value V_{DC_lim1}, and to charge the second capacitor 105 in response to a situation in which the DC voltage V_{DC} exceeds a second limit value V_{DC_lim2} that is greater than the first limit value V_{DC_lim1}. It is to be however noted that embodiments of the invention are not limited to any specific ways to control the DC-DC converter 106.

The controller 107 comprises driver circuits configured to drive controllable power electronic switches, e.g. IGBTs or MOSFETs, of the DC-DC converter 106. In figure 1, output signals of the driver circuits are denoted as S1, S2, S3, and S4. Furthermore, the controller 107 comprises a processing system for running the above-mentioned driver circuits in accordance with the control of the DC-DC converter 106. The processing system may comprise one or more analogue circuits, one or more digital processing circuits, or a combination thereof. Each digital processing circuit can be a programmable processor circuit provided with appropriate software, a dedicated hardware processor such as for example an application specific integrated circuit "ASIC", or a configurable hardware processor such as for example a field programmable gate array "FPGA". Furthermore, the processing system may comprise one or more memory circuits each of which can be for example a Random-Access Memory "RAM" circuit and/or a nonvolatile memory circuit such as e.g. an electrically erasable programmable read-only memory "EEPROM" circuit.

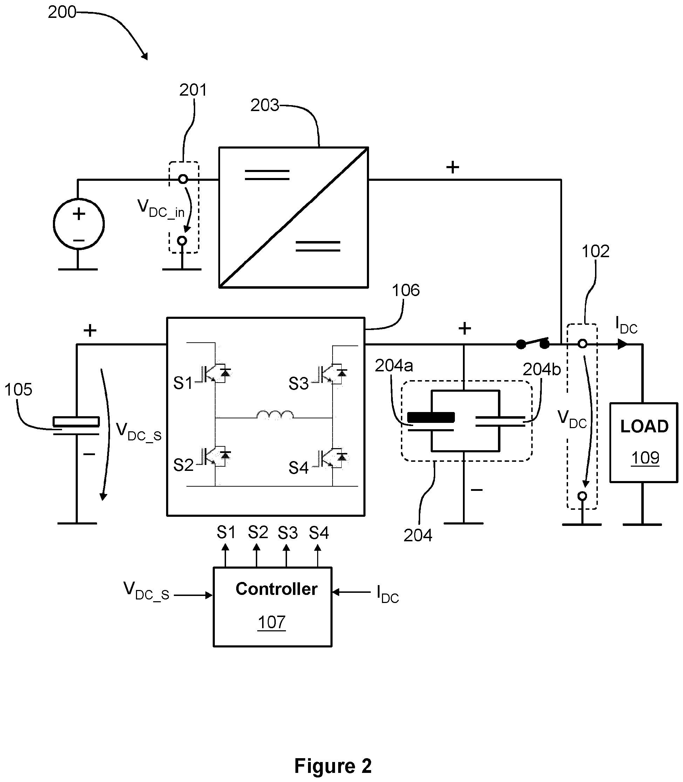

Figure 2 illustrates a power supply 200 according to an exemplifying and non-limiting embodiment. The power supply 200 is otherwise like the power supply 100 illustrated in figure 1, but the input voltage terminal 201 receives DC voltage V_{DC_in} as the input voltage, the input voltage converter 203 is a direct voltage "DC-DC" converter, and the first capacitor 204 comprises a parallel connection of an electrolytic capacitor 204a and a foil capacitor 204b. The foil capacitor 204b has very low equivalent series resistance "ESP" and a short charge/discharge time. Thus, the foil capacitor 204b is capable of responding to beginning phases of very abrupt changes in the power demand of the load 109. An advantage of the electrolytic capacitor 204a is that it has higher capacitance than a foil capacitor having substantially equal physical size. Depending on the reaction speed of the DC-DC converter 106, the first capacitor can be in some cases a mere foil capacitor. The input voltage converter 203 can be, for example, a buck-boost converter, a flyback converter, or a DC-DC converter of some other suitable type.

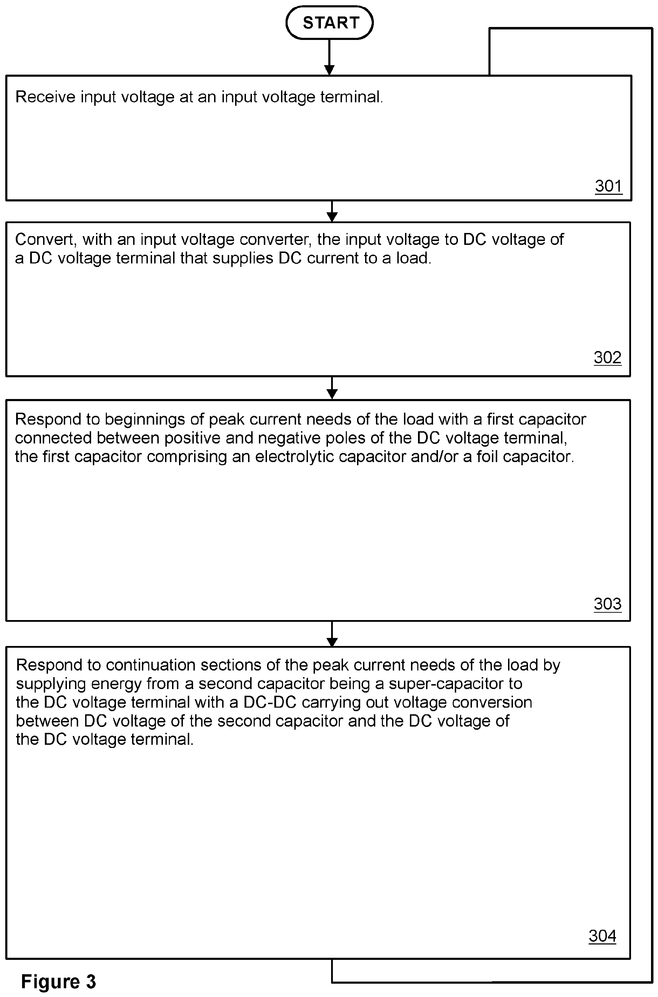

Figure 3 shows a flowchart of a method according to an exemplifying and non-limiting embodiment for supplying DC current to a load such as a data processing system, e.g. a graphics processing unit "GPU". The method comprises the following actions:
- action 301: receiving input voltage at an input voltage terminal,
- action 302: converting, with an input voltage converter, the input voltage to DC voltage of a DC voltage terminal that supplies the DC current to the load,
- action 303: responding to beginnings of peak current needs of the load with a first capacitor connected between positive and negative poles of the DC voltage terminal, the first capacitor comprising at least one of: an electrolytic capacitor and a foil capacitor, and
- action 304: responding to continuation sections of the peak current needs of the load by supplying energy from a second capacitor being a super-capacitor to the DC voltage terminal with a DC-DC converter carrying out voltage conversion between DC voltage of the second capacitor and the DC voltage of the DC voltage terminal.

A method according to an exemplifying and non-limiting embodiment comprises controlling the DC-DC converter to charge the second capacitor in response to a situation in which the DC current is below a first predetermined current limit and the DC voltage of the second capacitor is below a predetermined upper limit, and to discharge the second capacitor to supply the energy from the second capacitor to the DC voltage terminal in response to a situation in which the DC current is above a second predetermined current limit and the DC voltage of the second capacitor is above a predetermined lower limit.

In a method according to an exemplifying and non-limiting embodiment, the second capacitor comprises one or more carbon capacitor cells.

In a method according to an exemplifying and non-limiting embodiment, the second capacitor comprises one or more electric double layer capacitor "EDLC" cells.

In a method according to an exemplifying and non-limiting embodiment, the direct voltage converter is a bi-directional buck-boost converter.

In a method according to an exemplifying and non-limiting embodiment, the first capacitor comprises a parallel connection of an electrolytic capacitor and a foil capacitor.

In a method according to an exemplifying and non-limiting embodiment, the input voltage is single- or multi-phase AC voltage and the input voltage converter is an AC-DC converter.

In a method according to another exemplifying and non-limiting embodiment, the input voltage is DC voltage and the input voltage converter is a DC-DC converter.

The specific examples provided in the description given above should not be construed as limiting the applicability and/or the interpretation of the invention. Lists and groups of examples provided in the description given above are not exhaustive unless otherwise explicitly stated.

## Claims

1. A power supply (100, 200) comprising:
- an input voltage terminal (101, 201) for receiving input voltage (V_{AC}, V_{DC_in}),
- a direct voltage terminal (102) for supplying direct current (I_{DC}) to a load of the power supply,
- an input voltage converter (103, 203) between the input voltage terminal and the direct voltage terminal, and configured to convert the input voltage (V_{AC}, V_{DC_in}) to direct voltage (V_{DC}) of the direct voltage terminal, and
- a first capacitor (104, 204) connected between positive and negative poles of the direct voltage terminal, the first capacitor comprising at least one of: an electrolytic capacitor and a foil capacitor,
**characterized in that** the power supply comprises a second capacitor (105) being a super-capacitor, and a direct voltage converter (106) between the second capacitor and the direct voltage terminal and configured to carry out voltage conversion between direct voltage (V_{DC_S}) of the second capacitor and the direct voltage (V_{DC}) of the direct voltage terminal.

2. A power supply according to claim 1, wherein the power supply comprises a controller (107) configured to control the direct voltage converter to charge the second capacitor in response to a situation in which the direct current (I_{DC}) is below a first predetermined current limit and the direct voltage (V_{DC_S}) of the second capacitor is below a predetermined upper limit, and to discharge the second capacitor in response to a situation in which the direct current (I_{DC}) is above a second predetermined current limit and the direct voltage (V_{DC_S}) of the second capacitor is above a predetermined lower limit.

3. A power supply according to claim 1 or 2, wherein the second capacitor (105) comprises one or more carbon capacitor cells.

4. A power supply according to any one of claims 1-3, wherein the second capacitor (105) comprises one or more electric double layer capacitor cells.

5. A power supply according to any one of claims 1-4, wherein the direct voltage converter (106) is a bi-directional buck-boost converter.

6. A power supply according to any one of claims 1-5, wherein the first capacitor (204) comprises a parallel connection of the electrolytic capacitor (204a) and the foil capacitor (204b).

7. A power supply according to any one of claims 1-6, wherein the input voltage converter (103) is an alternating voltage - direct voltage converter.

8. A power supply according to any one of claims 1-6, wherein the input voltage converter (203) is a direct voltage converter.

9. A method for supplying direct current to a load, the method comprising:
- receiving (301) input voltage (V_{AC}, V_{DC_in}) at an input voltage terminal (101),
- converting (302), with an input voltage converter (103), the input voltage (V_{AC}, V_{DC_in}) to direct voltage (V_{DC}) of a direct voltage terminal (102) supplying the direct current (I_{DC}) to the load, and
- responding (303) to beginnings of peak current needs of the load with a first capacitor (104, 204) connected between positive and negative poles of the direct voltage terminal, the first capacitor comprising at least one of: an electrolytic capacitor and a foil capacitor,
**characterized in that** the method comprises responding (304) to continuation sections of the peak current needs of the load by supplying energy from a second capacitor (105) being a super-capacitor to the direct voltage terminal with a direct voltage converter (106) carrying out voltage conversion between direct voltage (V_{DC_S}) of the second capacitor and the direct voltage (V_{DC}) of the direct voltage terminal.

10. A method according to claim 9, wherein the method comprises controlling the direct voltage converter to charge the second capacitor in response to a situation in which the direct current (I_{DC}) is below a first predetermined current limit and the direct voltage (V_{DC_S}) of the second capacitor is below a predetermined upper limit, and to discharge the second capacitor to supply the energy from the second capacitor to the direct voltage terminal in response to a situation in which the direct current (I_{DC}) is above a second predetermined current limit and the direct voltage (V_{DC_S}) of the second capacitor is above a predetermined lower limit.

11. A method according to claim 9 or 10, wherein the second capacitor comprises one or more carbon capacitor cells.

12. A method according to any one of claims 9-11, wherein the second capacitor comprises one or more electric double layer capacitor cells.

13. A method according to any one of claims 9-12, wherein the direct voltage converter (106) is a bi-directional buck-boost converter.

14. A method according to any one of claims 9-13, wherein the first capacitor (204) comprises a parallel connection of the electrolytic capacitor (204a) and the foil capacitor (204b).

## Amended claims

### Amended claims in accordance with Rule 137(2) EPC.

1. A power supply (100, 200) comprising:
- an input voltage terminal (101, 201) for receiving input voltage (V_{AC}, V_{DC_in}),
- a direct voltage terminal (102) for supplying direct current (I_{DC}) to a load of the power supply,
- an input voltage converter (103, 203) between the input voltage terminal and the direct voltage terminal, and configured to convert the input voltage (V_{AC}, V_{DC_in}) to direct voltage (V_{DC}) of the direct voltage terminal, and
- a first capacitor (104, 204) connected between positive and negative poles of the direct voltage terminal,
wherein the power supply comprises a second capacitor (105) being a super-capacitor, and a direct voltage converter (106) between the second capacitor and the direct voltage terminal and configured to carry out voltage conversion between direct voltage (V_{DC_S}) of the second capacitor and the direct voltage (V_{DC}) of the direct voltage terminal, **characterized in that** the first capacitor (204) comprises a parallel connection of an electrolytic capacitor (204a) and a foil capacitor (204b).

2. A power supply according to claim 1, wherein the power supply comprises a controller (107) configured to control the direct voltage converter to charge the second capacitor in response to a situation in which the direct current (I_{DC}) is below a first predetermined current limit and the direct voltage (V_{DC_S}) of the second capacitor is below a predetermined upper limit, and to discharge the second capacitor in response to a situation in which the direct current (I_{DC}) is above a second predetermined current limit and the direct voltage (V_{DC_S}) of the second capacitor is above a predetermined lower limit.

3. A power supply according to claim 1 or 2, wherein the second capacitor (105) comprises one or more carbon capacitor cells.

4. A power supply according to any one of claims 1-3, wherein the second capacitor (105) comprises one or more electric double layer capacitor cells.

5. A power supply according to any one of claims 1-4, wherein the direct voltage converter (106) is a bi-directional buck-boost converter.

6. A power supply according to any one of claims 1-5, wherein the input voltage converter (103) is an alternating voltage - direct voltage converter.

7. A power supply according to any one of claims 1-5, wherein the input voltage converter (203) is a direct voltage converter.

8. A method for supplying direct current to a load, the method comprising:
- receiving (301) input voltage (V_{AC}, V_{DC-in}) at an input voltage terminal (101),
- converting (302), with an input voltage converter (103), the input voltage (V_{AC}, V_{DC_in}) to direct voltage (V_{DC}) of a direct voltage terminal (102) supplying the direct current (I_{DC}) to the load, and
- responding (303) to beginnings of peak current needs of the load with a first capacitor (104, 204) connected between positive and negative poles of the direct voltage terminal,
wherein the method comprises responding (304) to continuation sections of the peak current needs of the load by supplying energy from a second capacitor (105) being a super-capacitor to the direct voltage terminal with a direct voltage converter (106) carrying out voltage conversion between direct voltage (V_{DC_S}) of the second capacitor and the direct voltage (V_{DC}) of the direct voltage terminal, **characterized in that** the first capacitor (204) comprises a parallel connection of an electrolytic capacitor (204a) and a foil capacitor (204b).

9. A method according to claim 8, wherein the method comprises controlling the direct voltage converter to charge the second capacitor in response to a situation in which the direct current (I_{DC}) is below a first predetermined current limit and the direct voltage (V_{DC_S}) of the second capacitor is below a predetermined upper limit, and to discharge the second capacitor to supply the energy from the second capacitor to the direct voltage terminal in response to a situation in which the direct current (I_{DC}) is above a second predetermined current limit and the direct voltage (V_{DC_S}) of the second capacitor is above a predetermined lower limit.

10. A method according to claim 8 or 9, wherein the second capacitor comprises one or more carbon capacitor cells.

11. A method according to any one of claims 8-10, wherein the second capacitor comprises one or more electric double layer capacitor cells.

12. A method according to any one of claims 8-11, wherein the direct voltage converter (106) is a bi-directional buck-boost converter.
